# EUROPÄISCHE PATENTSCHRIFT

(11) **EP 2 570 239 B1**
(45) Veröffentlichungstag und Bekanntmachung des Hinweises auf die Patenterteilung: **15.04.2020**
(21) Anmeldenummer: 12179333.5
(22) Anmeldetag: 06.08.2012
(51) Int. Cl.: B25F 5/02

(54) **Werkzeugwechselmagazin für eine motorisch angetriebene Werkzeugmaschine und Werkzeugmaschine**
Tool change magazine for a motorized machine tool and machine tool
Magasin de changement d'outil pour une machine-outil motorisé et la machine-outil

(30) Priorität: 15.09.2011 DE 102011082785
(43) Veröffentlichungstag der Anmeldung: 20.03.2013
(73) Patentinhaber: ROBERT BOSCH GMBH, 70442 Stuttgart (DE)
(72) Erfinder: Nagy, Attila, 3521 Miscolc-Slirma (HU); Hesse, Hendrik, 71144 Steinenbronn (DE)

(56) Entgegenhaltungen:
- WO-A2-2009/008711
- DE-A1- 10 148 319
- DE-U1- 8 615 168
- DE-U1-202005 018 772
- US-A- 5 597 275
- US-A- 5 733 034
- US-A- 5 797 670
- US-A1- 2006 104 732
- US-A1- 2006 112 493
- US-B1- 6 752 268

## Beschreibung

### Stand der Technik

Die Erfindung betrifft ein Werkzeugwechselmagazin für eine motorisch angetriebene Werkzeugmaschine nach dem Oberbegriff des Anspruchs 1. Ferner betrifft die Erfindung eine motorisch angetriebene Werkzeugmaschine.

Ein derartiges Werkzeugwechselmagazin als Bestandteil in einer Werkzeugmaschine sowie eine entsprechende Werkzeugmaschine sind aus der DE 10 2006 059 688 A1 der Anmelderin bekannt. Das bekannte Werkzeugwechselmagazin weist Werkzeugkammern auf, in denen jeweils ein Werkzeug angeordnet ist. Damit ein Bediener bei einem Werkzeugwechsel erkennt, welches Werkzeug sich gerade im Einsatz befindet bzw. die Auswahl des richtigen Werkzeugs aus dem Werkzeugmagazin zu ermöglichen, weist die bekannte Werkzeugmaschine an der Oberseite ihres Gehäuses ein Sichtfenster auf, über das der Erkennung der Werkzeuge in den einzelnen Werkzeugkammern zugeordnete Kennzeichnungen optisch wahrnehmbar sind. Problematisch dabei ist jedoch die Wahrnehmbarkeit der angesprochenen Kennzeichnungen, z.B. bei relativ dunklen Umgebungsbedingungen. Die bekannte Werkzeugmaschine erfordert dabei grundsätzlich eine relativ nahe Anordnung der Kennzeichnung zu dem Sichtfenster, um es zu ermöglichen, dass so viel Licht wie möglich bis in den Bereich der Kennzeichnung der Werkzeugkammer fällt, um eine möglichst gute Wahrnehmbarkeit zu ermöglichen.

Die US 5 597 275 A beschreibt ein Werkzeug mit wechselbaren Einsatzwerkzeugen.

In der US 5 797 670 A wird ein Handwerkzeugmaschinenlicht offenbart, das mit einer Handwerkzeugmaschine verbindbar ist.

Die US 2006/112493 A1 zeigt einen Einsatzwerkzeugträger mit einer Lichtquelle.

### Offenbarung der Erfindung

Ausgehend von dem dargestellten Stand der Technik liegt der Erfindung die Aufgabe zugrunde, auch unter schwierigen Umgebungsbedingungen, insbesondere z.B. bei relativ dunklen Umgebungsbedingungen, stets eine einwandfreie Erkennbarkeit der in den Werkzeugkammern befindlichen Werkzeuge in einem Werkzeugwechselmagazin zu ermöglichen. Diese Aufgabe wird erfindungsgemäß bei einem Werkzeugwechselmagazin mit den kennzeichnenden Merkmalen des Anspruchs 1 dadurch gelöst, dass das Gehäuse des Werkzeugwechselmagazins zumindest im Bereich seiner Werkzeugkammern zumindest bereichsweise aus transparentem Material besteht. Dadurch wird eine Erkennung des jeweils in der Werkzeugkammer befindlichen Werkzeugs auf einfache Art und Weise von außen, auch ohne zusätzliche Kennzeichnung, ermöglicht.

In einer optional vorgesehenen Ausgestaltung des Werkzeugwechselmagazins, bei dem zusätzlich neben der optischen Erkennbarkeit eine eindeutige Kennzeichnung des in der Werkzeugaufnahme befindlichen Werkzeugs ermöglicht wird, wird vorgeschlagen, dass eine Kennzeichnung für das Werkzeug im Bereich der jeweiligen Werkzeugkammer des Gehäuses des Werkzeugwechselmagazins vorgesehen ist
In einer besonders bevorzugten konstruktiven Ausgestaltung des Werkzeugwechselmagazins, der eine Optimierung des Erkennens des in der Werkzeugaufnahme befindlichen Werkzeugs einerseits, und der Verstellung des Werkzeugwechselmagazins in eine Übernahme- bzw. Übergabeposition in der Werkzeugmaschine ermöglicht, wird vorgeschlagen, dass das aus dem nicht transparenten Kunststoffmaterial bestehende Gehäuseteil als manuell bedienbarer Verstellbereich zum Positionieren einer Werkzeugkammer in eine Übernahme- bzw. Übergabeposition in der Werkzeugmaschine ausgebildet ist.

Die Erfindung umfasst auch eine motorisch angetriebene Werkzeugmaschine, insbesondere, aber nicht ausschließlich unter Verwendung eines erfindungsgemäßen Werkzeugwechselmagazins. Dabei ist es erfindungsgemäß vorgesehen, dass der Bereich der Werkzeugkammer mittels einer Lichtquelle beleuchtbar ist. Durch eine derartige Lichtquelle wird somit auch unter ungünstigen Umgebungsbedingungen stets eine optimale Erkennbarkeit der Kennzeichnung bzw. der Werkzeugkammer für einen Bediener ermöglicht. Darüber hinaus ist die geometrische Anordnung bei Verwendung einer Kennzeichnung in Bezug auf den Abstand zum Sichtfenster gegenüber dem Stand der Technik weniger kritisch, da die Kennzeichnung beispielsweise auch in einem relativ großen Abstand zum Sichtfenster angeordnet werden kann, ohne dass die Gefahr besteht, dass eine derartige, vom Sichtfenster relativ weit entfernte Kennzeichnung für den Bediener nicht erkennbar ist.

Bevorzugt für die Lichtquelle ist die Verwendung wenigstens einer Leuchtdiode. Eine derartige Lichtquelle erfordert einen relativ geringen Raumbedarf, ist preisgünstig realisierbar und ermöglicht eine genügend starke Beleuchtung der Werkzeugkammer bzw. der Kennzeichnung.

Die Kosten durch die Anordnung der Leuchtdiode können darüber hinaus verringert werden, wenn die wenigstens eine Leuchtdiode auf einer Leiterplatte angeordnet ist, die eine Schaltung trägt. In der Praxis kann es sich bei dieser Schaltung um die Schaltung handeln, die gleichzeitig dazu dient, den Ladezustand eines Akkus der Werkzeugmaschine zu detektieren und zum Beispiel über entsprechende Leuchtmittel dem Bediener einen leeren Akku zu signalisieren. Dadurch benötigt die wenigstens eine Leuchtdiode lediglich einen relativ geringen zusätzlichen Bedarf auf der Leiterplatte sowie die entsprechenden Leiterbahnen zur Ansteuerung der Leuchtdiode.

In einer weiteren, ganz besonders bevorzugt vorgesehenen Variante der Werkzugmaschine ist es vorgesehen, dass die Stromversorgung der wenigstens einen Leuchtdiode von einem Betätigungselement zumindest mittelbar schaltbar ist, das gleichzeitig zur Betätigung des Werkzeugwechselmagazins dient. Dadurch wird eine besonders einfache und kostengünstige Möglichkeit der Betätigung bzw. Stromversorgung der Leuchtdiode geschaffen.

In einer besonders bevorzugten Variante der zuletzt genannten Ausführung ist es vorgesehen, dass die Stromversorgung der wenigstens einen Leuchtdiode nur während eines Werkzeugwechsels aktiviert ist. Dies hat den Vorteil, dass der Bediener nur für den relevanten Fall des Werkzeugwechsels die entsprechende Kennzeichnung wahrnimmt, so dass diese besonders hell beleuchtet werden kann, während beim Betrieb der Werkzeugmaschine durch die fehlende Beleuchtung der Kennzeichnung der Bediener dies nicht als eine Störung beim Arbeiten mit der Werkzeugmaschine wahrnimmt.

In einer weiteren Ausgestaltung der Erfindung kann es vorgesehen sein, dass das Sichtfenster aus Kunststoff besteht und eine Linsenfunktion aufweist. Eine derartige Linsenfunktion ermöglicht eine Vergrößerung der Kennzeichnung bzw. der Werkzeugkammer und somit eine bessere Wahrnehmung, insbesondere wenn die Werkzeugkammer bzw. Kennzeichnung in einem relativen großen Abstand zum Sichtfenster angeordnet ist.

Um über die gesamte Lebensdauer der Werkzeugmaschine stets eine optimale Lesbarkeit bzw. Erkennbarkeit der Werkzeugkammer bzw. der Kennzeichnung zu ermöglichen, kann es darüber hinaus vorgesehen sein, dass das Sichtfenster in einer Aussparung im Gehäuse angeordnet ist, wobei ein zur Erkennung der Werkzeugkammer bzw. der Kennzeichnung dienender Bereich des Sichtfensters unterhalb der Gehäuseoberfläche im Bereich der Aussprung angeordnet ist. Durch diese geschützte Anordnung des Sichtfensters werden insbesondere mechanische Beschädigungen des Sichtfensters, insbesondere Kratzer oder ähnliches, die während des Alltagsbetriebs beim Einsatz mit der Werkzeugmaschine auftreten können, vermieden, so dass stets eine optimale Erkennbarkeit ermöglicht wird.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: ein erfindungsgemäßes Werkzeugwechselmagazin zur Verwendung in einer Werkzeugmaschine in perspektivischer Ansicht,
- Fig. 2: eine Werkzeugmaschine während des Normalbetriebs im Längsschnitt,
- Fig. 3: die Werkzeugmaschine gemäß Fig. 2 während eines Werkzeugswechsels, ebenfalls im Längsschnitt,
- Fig. 4: eine geschnittene, perspektivische Ansicht der Werkzeugmaschine gemäß Fig. 3 im Bereich eines Werkzeugwechselmagazins in vergrößerter Darstellung und
- Fig. 5: in perspektivischer Darstellung einen aus Kunststoff bestehenden Einsatz zur Verwendung als Sichtfenster bei einer Werkzeugmaschine gemäß den Fig. 2 und 3.

Gleiche Bauteile bzw. Bauteile mit gleicher Funktion sind in den Figuren mit den gleichen Bezugsziffern versehen.

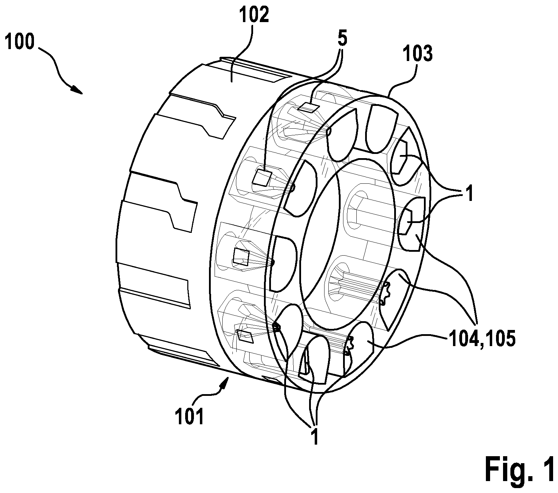

In der Fig. 1 ist ein erfindungsgemäßes Werkzeugwechselmagazin 100 dargestellt. Das Werkzeugwechselmagazin 100 weist ein in seiner Längsachse drehbares, ring- oder trommelartiges Gehäuse 101 auf, das in Längsrichtung zweigeteilt ist. Ein erstes Gehäuseteil 102 besteht aus einem nicht durchsichtigen Kunststoffmaterial, während ein sich in Längsrichtung an das erste Gehäuseteil 102 anschließendes zweites Gehäuseteil 103 aus transparentem Kunststoff ausgebildet ist. Das erste Gehäuseteil kann zur manuellen Verstellung des Werkzeugwechselmagazins in einer Werkzeugmaschine 10 dienen und beispielsweise mit Riffelungen o.ä. ausgestattet sein, um ein einfaches und genaues Verstellen des Werkzeugwechselmagazins 100 für einen Bediener zu ermöglichen. Zusätzlich sind bei dem nicht transparentem Kunststoff bestehenden Gehäuseteil 102 Kratzer o.ä. äußerlich nicht so auffällig wie beim Gehäuseteil 103. Innerhalb des Gehäuses 101 sind in gleichmäßigen Winkelabständen zueinander angeordnete Aufnahmen 104 zur Aufnahme jeweils eines Werkzeuges 1 ausgebildet. Die Aufnahmen 104 sind derart ausgebildet, dass die Werkzeuge 1 mittels eines stiftförmigen Elements in die jeweilige Aufnahme 104 ausgeschoben bzw. eingeführt werden können, wozu die Aufnahmen 104 an ihren beiden einander gegenüberliegenden Stirnseiten beispielsweise entsprechende Öffnungen bzw. Durchbrüche aufweisen. Insbesondere sind die Werkzeuge 1 als sogenannte BIT-Werkzeuge 1 ausgebildet, d.h., dass sie unterschiedliche Werkzeugspitzen aufweisen, um unterschiedliche Befestigungselemente, insbesondere unterschiedliche Schrauben, ein- bzw. ausschrauben zu können. Das zweite, transparente Gehäuseteil 103 ist in dem Bereich der Werkzeuge 1 angeordnet, in dem sich auch die Spitzen der Werkzeuge 1 befinden. Dadurch wird es für einen Bediener ermöglicht, von außen zu erkennen, welches Werkzeug 1 sich in der Aufnahme 104 befindet, da die Spitze des Werkzeugs 1 ein charakteristisches Merkmal für das Werkzeug 1 darstellt.

Die Aufnahmen 104 bilden Werkzeugkammern 105 aus und können zusätzlich jeweils eine im Detail nicht näher dargestellte Kennzeichnung 5, z.B. in Form eines Piktogramms oder einer Beschriftung aufweisen, die z.B. durch eine schwarze Farbe im Bereich des zweiten Gehäuseteils 103 im Bereich der Werkzeugkammer 105 realisiert ist.

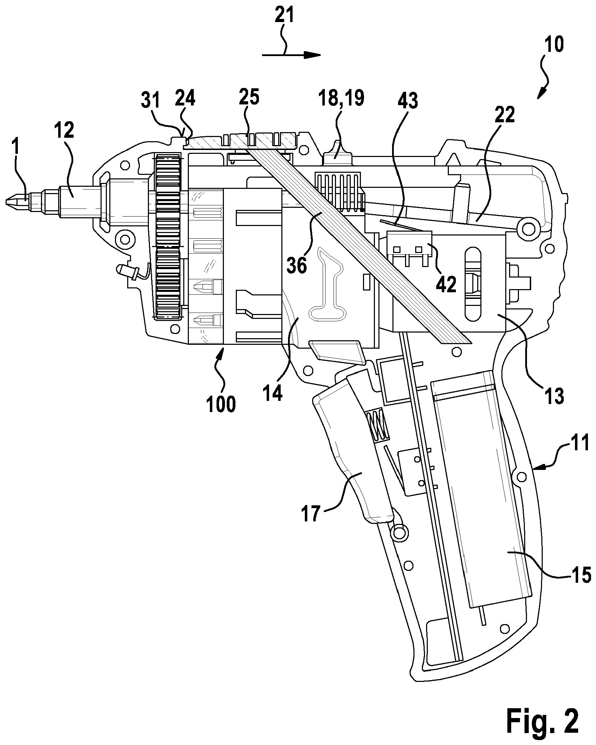

In der Fig. 2 ist eine Werkzeugmaschine 10 in Form einer motorisch angetriebenen Handwerkzeugmaschine dargestellt. Die Werkzeugmaschine 10 weist ein pistolenförmiges Gehäuse 11 auf, in dem in an sich bekannter Art und Weise eine Werkzeugaufnahme 12 für die Werkzeuge 1 des Werkzeugwechselmagazins 100 angeordnet ist. Die Werkzeugaufnahme 12 wird von einem als Elektromotor 13 ausgebildeten Antriebsmotor angetrieben, der auf ein Getriebe 14 wirkt, das wiederum die Werkzeugaufnahme 12 antreibt. Zwischen dem Getriebe 14 und der Werkzeugaufnahme 12 ist noch das von einem Bediener manuell von außen drehbare Werkzeugwechselmagazin 100 angeordnet, dessen Werkzeugkammern 105 zum Austauschen eines Werkzeugs 1 in bzw. aus der Werkzeugaufnahme 12 fluchtend mit der Längsachse der Werkzeugaufnahme 12 angeordnet werden können.

Der Antriebsmotor 13 der Werkzeugmaschine 10 wird über eine wideraufladbare Stromquelle 15 in Form eines Akkumulators betrieben und über ein Bedienelement 17 betätigt. Auf der Oberseite des Gehäuses 11 ist ein Stellglied 18 bzw. Betätigungselement in Form eines Bedienungsschiebers 19 angeordnet, der von einem Bediener zum Wechseln eines Werkzeugs 1 in Richtung des Pfeils 21 bewegt werden kann, um über einen Werkzeugwechselmechanismus 22 das jeweils gewünschte Werkzeug 1 in die Werkzeugaufnahme 12 einschieben zu können bzw. ein entsprechendes Werkzeug 1 aus der Werkzeugaufnahme 12 in die Werkzeugkammer 105 zurückzuschieben. Zur Auswahl des entsprechenden Werkzeugs 1 bzw. der entsprechenden Werkzeugkammer 105 kann das Werkzeugwechselmagazin 100 von dem Bediener von außen über das vom Bediener manuell drehbare erste Gehäuseteil 102 in die entsprechende, mit der Werkzeugaufnahme 12 fluchtende Position verdreht werden.

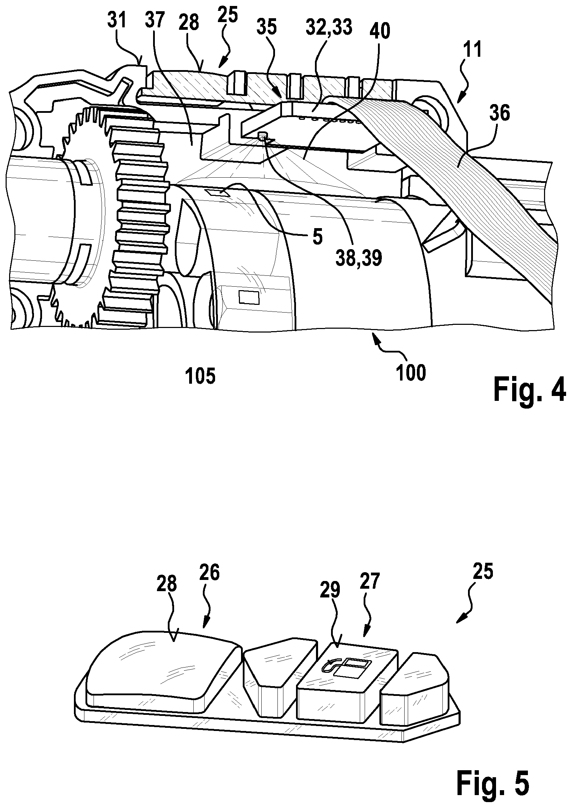

Hinsichtlich der genauen Funktionsweise sowie des weiteren, detaillierteren Aufbaus einer derartigen, bisher geschriebenen Werkzeugmaschine 10 wird exemplarisch auf die DE 10 2006 059 688 A1 der Anmelderin verwiesen. Auf seiner Gehäuseoberseite weist das Gehäuse 11 eine Aussparung 24 zur Aufnahme eines insbesondere aus Kunststoff bestehendem, in der Fig. 5 in Einzeldarstellung dargestellten Sichtfensters 25 auf. Das Sichtfenster 25 weist gemäß der Fig. 5 einen ersten Bereich 26 auf, über den der Bediener die jeweils mit der Werkzeugaufnahme 12 zusammenwirkende Werkzeugkammer 105 sowie ggf. die zusätzlich vorhandene Kennzeichnung 5, und somit das betreffende Werkzeug 1 erkennen kann. Der erste Bereich 26 kann durch eine entsprechende (gewölbte) Formung eine Linsenfunktion aufweisen, d.h., dass eine über den ersten Bereich 26 erkennbare Kennzeichnung 5 bzw. das Werkzeug 1 für den Bediener in vergrößerter Darstellung erscheint. In Längsrichtung versetzt zum ersten Bereich 26 weist das Sichtfenster 25 einen zweiten Bereich 27 auf, der der Darstellung des Ladezustands der Stromquelle 15 bedient. Insbesondere wird der Bediener bei einem Nachlassen der Motorleistung bzw. bei einer leerer werdenden Stromquelle 15 durch eine entsprechende Beleuchtung des zweiten Bereichs 27 zu einem Nachladen der Stromquelle 15 angehalten.

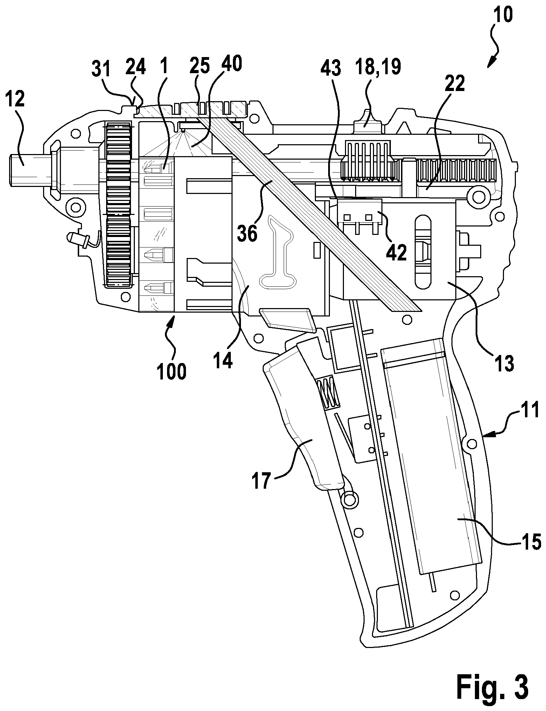

Anhand der Fig. 5 ist weiterhin erkennbar, dass die Oberseite 28 des ersten Bereichs 26 ein tieferes Niveau aufweist als die Oberseite 29 des zweiten Bereichs 27. Dies hat zur Folge, dass der erste Bereich 26 innerhalb der Aussparung 24 vertieft angeordnet ist, so dass er unterhalb der Gehäuseoberfläche 31 der Aussparung 24 geschützt angeordnet ist (Fig. 2 und 3).

Unterhalb des zweiten Bereichs 27 des Sichtfensters 25 ist ein Schaltungsträger 32 in Form einer Leiterplatte 33 angeordnet (Fig. 4). Die Leiterplatte 33 trägt eine elektrische bzw. elektronische Schaltung 35 und ist über eine Kabelverbindung 36 zumindest mit der Stromquelle 15 wenigstens mittelbar verbunden. Die Schaltung 35 dient u.a. zumindest dazu, den Ladezustand der Stromquelle 15 zu erfassen und beim Unterschreiten eines gewissen Ladezustandes bzw. anhand sonstiger Kriterien, wie erläutert, dem Bediener durch eine entsprechende Beleuchtung des zweiten Bereichs 27 des Sichtfensters 25 dies mitzuteilen. Ebenfalls kann es vorgesehen sein, über die Schaltung 35 die Drehrichtung des Elektromotors 13 zu erkenn und dies über entsprechend beleuchtete Teile des zweiten Bereichs 27 im Sichtfenster 25 dem Bediener zu signalisieren.

Der erste Bereich 26 des Sichtfensters 25 ist, wie insbesondere anhand der Fig. 4 erkennbar ist, mit dem zweiten, transparenten Gehäuseteil 103 des Gehäuses 101 fluchtend angeordnet, wobei zwischen dem ersten Bereich 26 und der Oberfläche des Werkzeugwechselmagazins 100 ein Bauteile freier Kanal 37 bzw. ein Leerraum ausgebildet ist. Das bedeutet, dass die im Bereich der entsprechenden Werkzeugkammer 105 angeordnete Kennzeichnung 5 bzw. das transparente Gehäuseteil 103 über den ersten Bereich 26 des Sichtfensters 25 für einen Bediener von außen erkennbar ist.

Um die Erkennbarkeit der Kennzeichnung 5 bzw. des in der Werkzeugkammer 105 befindlichen Werkzeugs 1 für den Bediener insbesondere auch unter schwierigen Lichtverhältnissen zu ermöglichen, ist es erfindungsgemäß vorgesehen, dass der Bereich der Kennzeichnung 5 bzw. des Gehäuseteils 103 von einer Lichtquelle 38, insbesondere in Form wenigstens einer LED 39 (Leuchtdiode), beleuchtet ist. Die wenigstens eine LED 39 ist dabei bevorzugt auf der dem Werkzeugwechselmagazin 100 zugewandten Seite an der Unterseite der Leiterplatte 33 angeordnet und sendet einen Lichtkegel 40 aus, der über einen entsprechenden Freiraum zum Kanal 37 auch die Kennzeichnung 5 bzw. die Werkzeugkammer 105 überdeckt bzw. beleuchtet.

Die wenigstens eine LED 39 wird bevorzugt lediglich für den Fall mit Strom versorgt, in dem ein Bediener einen Werkzeugwechsel vornimmt. Hierzu ist ein in den Fig. 2 und 3 erkennbarer Schalter 42 mit einem beweglich angeordneten Schaltkontakt 43 in Form einer Federzunge vorgesehen, der bei einer entsprechenden Betätigung des Stellschiebers 18 in Richtung des Schalters 42 gedrückt wird und einen entsprechenden Stromkreis zur Stromversorgung der wenigstens einen LED 39 schließt, wie dies aus einem Vergleich der Fig. 2 und 3 erkennbar ist. Nach dem Werkzeugwechsel befindet sich der Stellschieber 18 wieder in seiner der Werkzeugaufnahme 12 zugewandten Position entsprechend der Fig. 2, bei dem der Schaltkontakt 43 wieder geöffnet ist, so dass die wenigstens eine LED 39 stromlos geschaltet ist.

## Patentansprüche

1. Werkzeugwechselmagazin (100) für eine motorisch angetriebene Werkzeugmaschine (10), insbesondere Handwerkzeugmaschine mit drehbar anzutreibendem Werkzeug (1), mit einem ring- oder trommelartigen, in seiner Längsachse drehbaren Gehäuse (101), in dem Werkzeugkammern (105) zur Aufnahme jeweils eines Werkzeugs (1) angeordnet sind, wobei die Werkzeugkammer (105) zum Aus- und Einschieben eines Werkzeugs (1) aus bzw. in die Werkzeugkammer (105) ausgebildet ist, wobei das Gehäuse (101) zumindest im Bereich seiner Werkzeugkammern (105) zumindest bereichsweise aus transparentem Material besteht,
**dadurch gekennzeichnet,**
**dass** das Gehäuse (101) aus zwei Gehäuseteilen (102, 103) besteht, die in Längsrichtung des Gehäuses (11) aneinander anschließen, dass das eine Gehäuseteil (102) aus einem nicht transparenten Kunststoffmaterial und das andere Gehäuseteil (103) aus einem transparentem Kunststoffmaterial besteht, und dass das Werkzeug (1) mit einem von einem Bediener von außen erkennbaren charakteristischen Merkmal, insbesondere seiner Werkzeugspitze, innerhalb des transparenten Gehäuseteils (103) angeordnet ist und das aus dem nicht transparenten Kunststoffmaterial bestehende Gehäuseteil (102) als manuell bedienbarer Verstellbereich zum Positionieren einer Werkzeugkammer (105) in eine Übergabeposition in der Werkzeugmaschine (10) ausgebildet ist.

2. Werkzeugwechselmagazin (100) nach Anspruch 1,
**dadurch gekennzeichnet,**
**dass** eine Kennzeichnung (5) für das Werkzeug (1) im Bereich der jeweiligen Werkzeugkammer (105) des Gehäuses (101) des Werkzeugwechselmagazins (100) vorgesehen ist.

3. Handwerkzeugmaschine mit einem Werkzeugwechselmagazin (100) nach einem der vorhergehenden Ansprüche.

4. Motorisch angetriebene Handwerkzeugmaschine mit drehbar anzutreibendem Werkzeug (1), mit einem Werkzeugwechselmagazin (100) nach Anspruch 1 oder 2, dessen Werkzeugkammern (105) jeweils in eine mit einer Werkzeugaufnahme (12) fluchtenden Übergabeposition verstellbar sind, wobei die in der Übergabeposition befindliche Werkzeugkammer (105) mittels eines im Bereich eines Gehäuses (11) befindlichen Sichtfensters (25) von außen erkennbar ist,
**dadurch gekennzeichnet,**
**dass** der Bereich der Werkzeugkammer (105) mittels einer Lichtquelle (38) beleuchtbar ist.

5. Handwerkzeugmaschine nach Anspruch 4,
**dadurch gekennzeichnet,**
**dass** die Lichtquelle (38) wenigstens eine Leuchtdiode (39) umfasst.

6. Handwerkzeugmaschine nach Anspruch 5,
**dadurch gekennzeichnet,**
**dass** die wenigstens eine Leuchtdiode (39) zwischen dem Sichtfenster (25) und dem Bereich einer zu beleuchtenden Kennzeichnung (5) oder der zu beleuchtenden Werkzeugkammer (105) in einem Freiraum im Gehäuse (11) angeordnet ist.

7. Handwerkzeugmaschine nach Anspruch 5 oder 6,
**dadurch gekennzeichnet,**
**dass** die wenigstens eine Leuchtdiode (39) auf einer Leiterplatte (33) angeordnet ist, die eine Schaltung (35) trägt.

8. Handwerkzeugmaschine nach einem der Ansprüche 5 bis 7,
**dadurch gekennzeichnet,**
**dass** die Stromversorgung der wenigstens einen Leuchtdiode (39) von einem Betätigungselement (18) zumindest mittelbar schaltbar ist, das gleichzeitig zur Betätigung des Werkzeugwechselmagazins (100) dient.

9. Handwerkzeugmaschine nach Anspruch 8,
**dadurch gekennzeichnet,**
**dass** die Stromversorgung der wenigstens einen Leuchtdiode (39) nur während eines Werkzeugwechsels aktiviert ist.

10. Handwerkzeugmaschine nach einem der Ansprüche 4 bis 9,
**dadurch gekennzeichnet,**
**dass** das Sichtfenster (25) aus Kunststoff besteht und eine Linsenfunktion aufweist.

11. Handwerkzeugmaschine nach Anspruch 10,
**dadurch gekennzeichnet,**
**dass** das Sichtfenster (25) in einer Aussparung (24) im Gehäuse (11) angeordnet ist, wobei ein zur Erkennung der Werkzeugkammer (105) dienender Bereich (26) des Sichtfensters (25) unterhalb der Gehäuseoberfläche (31) im Bereich der Aussprung (24) angeordnet ist.

## Claims

1. Tool change magazine (100) for a motor-driven machine tool (10), in particular handheld machine tool, comprising a tool (1) to be driven in a rotatable fashion, comprising a ring- or drum-like housing (101), which is rotatable in its longitudinal axis and in which are arranged tool chambers (105) for receiving a respective tool (1), wherein the tool chamber (105) is configured for sliding a tool (1) out of and into the tool chamber (105), wherein the housing (101) at least regionally consists of transparent material at least in the region of its tool chambers (105),
**characterized**
**in that** the housing (101) consists of two housing parts (102, 103) adjacent to one another in the longitudinal direction of the housing (11), in that one housing part (102) consists of a non-transparent plastics material and the other housing part (103) consists of a transparent plastics material, and in that the tool (1) is arranged within the transparent housing part (103) with a characteristic feature, in particular its tool tip, able to be recognized by an operator from outside, and the housing part (102) consisting of the non-transparent plastics material is configured as a manually operable adjustment region for positioning a tool chamber (105) into a transfer position in the machine tool (10).

2. Tool change magazine (100) according to Claim 1,
**characterized**
**in that** an identification (5) for the tool (1) is provided in the region of the respective tool chamber (105) of the housing (101) of the tool change magazine (100).

3. Handheld machine tool comprising a tool change magazine (100) according to either of the preceding claims.

4. Motor-driven handheld machine tool comprising a tool (1) to be driven in a rotatable fashion, comprising a tool change magazine (100) according to Claim 1 or 2, the tool chambers (105) of which are adjustable in each case into a transfer position aligned with a tool receptacle (12), wherein the tool chamber (105) situated in the transfer position is able to be recognized from outside by means of a viewing window (25) situated in the region of a housing (11),
**characterized**
**in that** the region of the tool chamber (105) is able to be illuminated by means of a light source (38).

5. Handheld machine tool according to Claim 4,
**characterized**
**in that** the light source (38) comprises at least one light-emitting diode (39).

6. Handheld machine tool according to Claim 5,
**characterized**
**in that** the at least one light-emitting diode (39) is arranged between the viewing window (25) and the region of an identification (5) to be illuminated or the tool chamber (105) to be illuminated in a free space in the housing (11).

7. Handheld machine tool according to Claim 5 or 6,
**characterized**
**in that** the at least one light-emitting diode (39) is arranged on a printed circuit board (33) bearing a circuit (35).

8. Handheld machine tool according to any of Claims 5 to 7,
**characterized**
**in that** the power supply of the at least one light-emitting diode (39) is switchable at least indirectly by an actuation element (18), which simultaneously serves for actuating the tool change magazine (100).

9. Handheld machine tool according to Claim 8,
**characterized**
**in that** the power supply of the at least one light-emitting diode (39) is activated only during a tool change.

10. Handheld machine tool according to any of Claims 4 to 9,
**characterized**
**in that** the viewing window (25) consists of plastic and has a lens function.

11. Handheld machine tool according to Claim 10,
**characterized**
**in that** the viewing window (25) is arranged in a cutout (24) in the housing (11), wherein a region (26) of the viewing window (25) that serves for recognizing the tool chamber (105) is arranged below the housing surface (31) in the region of the cutout (24).

## Revendications

1. Magasin de changement d'outil (100) pour machine-outil motorisée (10), en particulier machine-outil portative comportant un outil à entraîner en rotation (1), un boîtier (101) en forme d'anneau ou de tambour et pouvant tourner dans son axe longitudinal et dans lequel sont disposées des chambres à outil (105) destinées à recevoir respectivement un outil (1), les chambres à outil (105) étant conçues pour sortir et insérer un outil (1) de ou dans la chambre à outil (105), le boîtier (101) étant composé au moins par endroits de matériau transparent au moins au niveau de ses chambres à outil (105),
**caractérisé en ce que**
le boîtier (101) est composé de deux parties de boîtier (102, 103) qui se raccordent l'une à l'autre dans le sens longitudinal du boîtier (11), qu'une partie du boîtier (102) est composée d'une matière plastique non transparente et que l'autre partie du boîtier (130) est composée d'une matière plastique transparente, et que l'outil (1), doté d'une caractéristique reconnaissable de l'extérieur par un utilisateur, en particulier sa pointe d'outil, est disposé à l'intérieur de la partie transparente du boîtier (103) et que la partie du boîtier composée de matière plastique non transparente (102) est réalisée sous forme d'une zone de réglage manœuvrable manuellement pour le positionnement d'une chambre à outil (105) dans une position de transfert dans la machine-outil (10).

2. Magasin de changement d'outil (100) selon la revendication 1,
**caractérisé en ce**
**qu'**il est prévu un marquage (5) pour l'outil (1) au niveau de la chambre d'outil respective (105) du boîtier (101) du magasin de changement d'outil (100).

3. Machine-outil comportant un magasin de changement d'outil (100) selon une des revendications précédentes.

4. Machine-outil motorisée comportant un outil à entraîner en rotation (1), un magasin de changement d'outil (100) selon la revendication 1 ou 2 et dont les chambres à outil (105) sont réglables respectivement dans une position de transfert alignée avec un support d'outil (12), la chambre à outil (105) se trouvant dans la position de transfert étant reconnaissable de l'extérieur au moyen d'un regard (25) se trouvant au niveau d'un boîtier (11),
**caractérisé en ce que**
la zone de la chambre à outil (105) peut être éclairée au moyen d'une source lumineuse (38).

5. Machine-outil selon la revendication 4,
**caractérisée en ce que**
la source lumineuse (38) comprend au moins une diode électroluminescente (39).

6. Machine-outil selon la revendication 5,
**caractérisée en ce que**
l'au moins une diode électroluminescente (39) est disposée entre le regard (25) et la zone de marquage (5) à éclairer ou la chambre à outil à éclairer (105) dans un espace libre du boîtier (11).

7. Machine-outil selon la revendication 5 ou 6,
**caractérisée en ce que**
l'au moins une diode électroluminescente (39) est disposée sur une carte de circuit imprimé (33) qui supporte un circuit (35).

8. Machine-outil selon une des revendications 5 à 7,
**caractérisée en ce que**
l'alimentation électrique de l'au moins une diode électroluminescente (39) est commutable au moins indirectement par un élément d'actionnement (18) qui sert en même temps à actionner le magasin de changement d'outil (100).

9. Machine-outil selon la revendication 8,
**caractérisée en ce que**
l'alimentation électrique de l'au moins une diode électroluminescente (39) n'est activée que pendant un changement d'outil.

10. Machine-outil selon une des revendications 4 à 9,
**caractérisée en ce que**
le regard (25) est composé de plastique et présente une fonction de lentille.

11. Machine-outil selon la revendication 10,
**caractérisée en ce que**
le regard (25) est disposé dans un évidement (24) du boîtier (11), une zone (26) servant à reconnaître la chambre à outil (105) du regard (25) étant disposée en-dessous de la surface du boîtier (31) au niveau de l'évidement (24).
